Europäisches Patentamt

European Patent Office

Office européen des brevets

(11) Publication number: **0 152 165**
**B1**

(12) **EUROPEAN PATENT SPECIFICATION**

(45) Date of publication of patent specification: 29.03.89

(51) Int. Cl.⁴: **G 01 N 21/88,** G 11 B 27/36,
G 11 B 7/00

(21) Application number: **85300101.4**

(22) Date of filing: **07.01.85**

(54) Defect inspecting apparatus for inspecting defects in optical type disc.

(30) Priority: **10.01.84 JP 2497/84**

(43) Date of publication of application:
**21.08.85 Bulletin 85/34**

(45) Publication of the grant of the patent:
**29.03.89 Bulletin 89/13**

(84) Designated Contracting States:
**DE GB NL**

(56) References cited:
EP-A-0 087 795
DE-A-2 704 983
DE-A-2 854 474
FR-A-2 166 390
GB-A-2 066 949
US-A-4 325 134
PATENT ABSTRACTS OF JAPAN, vol. 8, no. 275
(P-321)1712r, 15th December 1984 & JP - A - 59
140 637

PATENT ABSTRACTS OF JAPAN, vol. 7, no. 32
(P-174)1177r, 8th February 1983 & JP - A - 57
183 645

(73) Proprietor: **VICTOR COMPANY OF JAPAN,
LIMITED**
**12, 3-chome, Moriya-Cho Kanagawa-ku
Yokohama-Shi Kanagawa-Ken 221 (JP)**

(72) Inventor: **Fujiki, Goro**
**No. 1612-45, Soobudai-Danchi
Sagamihara-Shi Kanagawa-Ken (JP)**
Inventor: **Owaki, Isao**
**No. 4-11-8, Okusawa Setagaya-Ku
Tokyo (JP)**
Inventor: **Nemoto, Kouji**
**Green Haitsu 6-5-102 No. 550, Nagasawa
Yokosuka-Shi Kanagawa-Ken (JP)**

(74) Representative: **Robinson, John Stuart et al**
**MARKS & CLERK 57/60 Lincoln's Inn Fields
London WC2A 3LS (GB)**

Courier Press, Leamington Spa, England.

## Description

The present invention generally relates to defect inspecting apparatuses for inspecting defects in optical type discs, and more particularly to a defect inspecting apparatus which can inspect defects in an optical type disc within a short time period.

Generally, optical type discs such as video discs and digital audio discs (DADs) have been reduced to practice. A reproducing apparatus for playing an optical type disc (hereinafter simply referred to as a disc) impinges a light beam on the disc, and carries out a reproduction by use of a light beam reflected from a signal recording surface of the disc. However, defects may be introduced when manufacturing the disc. The defects include a discontinuity or chip in an aluminium film which is formed on the signal recording surface of the disc by vapor deposition, a foreign particle mixed within a transparent main plastic body of the disc, a scratch formed on the surface of the disc, and the like. When the disc containing such defects is played on the reproducing apparatus, the level of the signal which is reproduced from the disc decreases or increases abnormally at parts of the disc where the defects exist. In this case, errors are introduced during the reproduction, and deterioration is introduced in the picture quality of the reproduced picture, the sound quality of the reproduced sound, and the like.

Accordingly, the manufacturer of the disc must inspect the manufactured discs before shipment so as to determine the existence, size, and number of the defects. When the number and/or size of the defects exceed a tolerable range, the disc is discriminated as being a defective disc. A defect inspecting apparatus is used to discriminate such a defective disc.

In a conventional defect inspecting apparatus (see e.g. EP—A—0087795) of a first type, the disc is rotated at a high speed, and a scanning light beam is irradiated on the disc. The scanning light beam is moved continuously at a slow speed from the outer peripheral part to the inner peripheral part of the disc in a radial direction of the disc. A light beam reflected from the disc is detected, so as to detect the defects in the disc by detecting an abnormal change such as a decrease and an increase in the intensity of this light beam. However, according to the conventional apparatus of the first type, the disc must be rotated at the high speed so as to improve the resolution with which the defects are detected. For this reason, the apparatus must be provided with a driving device for rotating the disc at the high speed. But the use of such a driving device deteriorates the reliability and durability of the apparatus. Further, it takes a long time period to inspect one disc because the light beam is moved at the slow speed. Therefore, it takes an extremely long time period for the apparatus of this first type to inspect a large number of discs which are manufactured, and the inspecting efficiency is poor.

On the other hand, there is a conventional defect inspecting apparatus of a second type in which the scanning light beam is moved at a high speed a plurality of times in the radial direction of the disc. According to this conventional apparatus of the second type, the disc is rotated at a slow speed, and the inspection is completed when the disc undergoes one revolution. However, since the scanning light beam must be swung at the high speed, it is necessary to provide a device for swinging at a high speed a mirror which reflects the scanning light beam. Hence, the problems of poor reliability and poor durability are also present in the apparatus of the second type, as in the case of the conventional apparatus of the first type. In addition, because the disc is rotated at the slow speed, the problem of poor inspecting efficiency is also not solved in the apparatus of the second type.

Accordingly, it is a general object of the present invention to provide a novel and useful defect inspecting apparatus for inspecting defects in optical type discs, in which the problems described heretofore are eliminated.

Such an apparatus is disclosed in claim 1.

Another and more specific object of the present invention is to provide a defect inspecting apparatus which irradiates a light beam having an approximately rectangular cross section over a signal recording region of a disc so that an irradiated part on the disc has an approximately rectangular shape having a longer side which is at least slightly greater than the width of the signal recording region in a radial direction of the disc. A light beam reflected from the disc is received by an image sensor having linearly arranged photoelectric converting elements, and an output of the image sensor is successively produced responsive to a clock pulse. Defects in the disc are detected from the output of the image sensor.

Still another object of the present invention is to provide a defect inspecting apparatus which disciminates from the output of the image sensor the size, number, and the like of the detected defects, so as to discriminate whether the disc is defective.

Other objects and further features of the present invention will be apparent from the following detailed description when read in conjunction with the accompanying drawings.

Figs. 1A and 1B are a front view and a side view respectively showing an optical system of the defect inspecting apparatus according to the present invention;

Fig. 2 is a plan view showing an optical type disc shown in Figs. 1A and 1B;

Fig. 3 is an enlarged view showing a vertical cross section of a part of the optical type disc;

Fig. 4 is a graph showing the level of an output signal of an image sensor in the apparatus shown in Fig. 1A;

Fig. 5 is a systematic block diagram showing an embodiment of a defect inspecting apparatus according to the present invention;

Figs 6A and 6B show signal waveforms for explaining the defect detecting operation of the block system shown in Fig. 5 for a case where the output signal level of the image sensor decreases due to the existence of a defect;

Figs. 7A and 7B show signal waveforms for explaining the defect detecting operation of the block system shown in Fig. 5 for a case where the output signal level of the image sensor increases due to the existence of a defect;

Fig. 8 is a diagram for explaining the operation of discriminating the size of a defect in the disc;

Fig. 9 is a flow chart for explaining the defect detecting operation of a central processing unit in the block system shown in Fig. 5;

Figs. 10A, 10B, 10C, and 10D are diagrams for explaining the defect detecting operation in accordance with the flow chart shown in Fig. 9; and

Fig. 11 is a flow chart for explaining the operation of discriminating a defective disc in the central processing unit in the block system shown in Fig. 5 by use of the results obtained from the routine shown in Fig. 9.

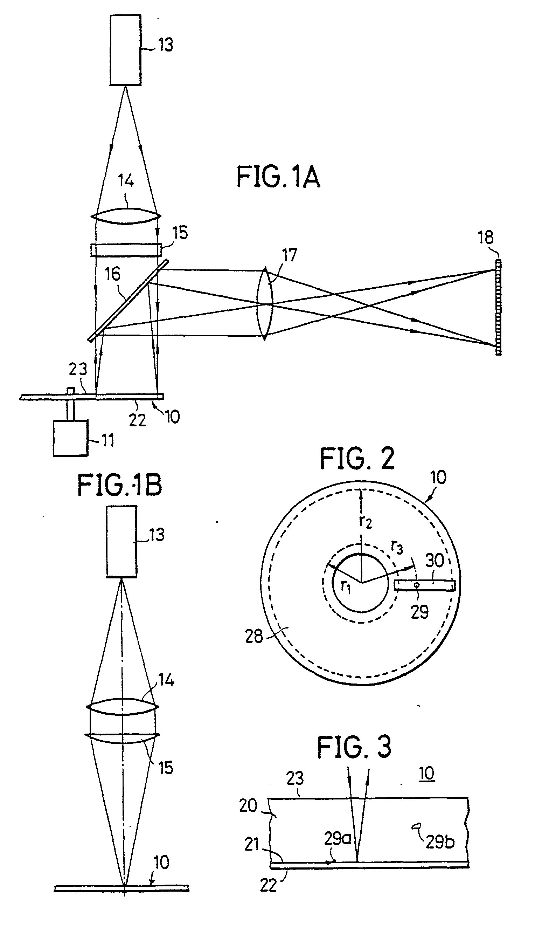

An optical system of the defect inspecting apparatus according to the present invention is shown in Figs. 1A and 1B. An optical type disc 10 which is to be inspected, is rotated at a predetermined rotational speed which will be described later on in the specification by a motor 11. For example, the disc 10 comprises a plastic layer 20 having a surface 23, a signal recording surface 21 formed on one side of the plastic layer 20, and a protecting layer 22 for protecting the signal recording surface 21 as shown in Fig. 3. In Figs. 1A and 1B, the disc 10 is positioned with the surface 23 facing up. A light beam irradiated on the disc 10 from the surface 23 is transmitted through the plastic layer 20, reflected by the signal recording surface 21, transmitted through the plastic layer 20 again, and is directed outside the disc 10 from the surface 23.

In Figs. 1A and 1B, a light beam from a laser beam generator 13 is converted into a cylindrical light beam by a collimator lens 14, and is directed toward a cylindrical lens 15. The cylindrical lens 15 converts the cylindrical light beam into a light beam having an approximately rectangular cross section with the longer side of the rectangle extending in a radial direction of the disc 10. This light beam from the cylindrical lens 15 will hereinafter be simply referred to as a rectangular light beam. The rectangular light beam from the cylindrical lens 15 hits the disc 10, and an irradiated part is formed on the disc 10. This irradiated part on the disc has an approximately rectangular shape with the longer side of the rectangle extending in the radial direction of the disc 10.

As shown in Fig. 2, a signal recording range 28 of the disc 10 exists between a phantom circle having a radius $r_1$ and a phantom circle having a radius $r_2$. In other words, the width of the signal recording range 28 in the radial direction of the disc 10 is equal to $(r_2 - r_1)$. An irradiated part 30 on the disc 10 has an approximately rectangular shape with the longer side of the rectangle extending in the radial direction of the disc 10 as described before. The longer side of the rectangular irradiated part 30 is slightly greater than the width $(r_2 - r_1)$ of the signal recording range 28. Hence, the irradiated part 30 will scan over the entire signal recording range 28 when the disc 10 is rotated by the motor 11 and undergoes one revolution.

In Fig. 1A, the light beam reflected from the signal recording surface 21 of the disc 10 is reflected by a half mirror 16, passed through a lens 17, and is imaged on an image sensor 18. The rectangular light beam from the cylindrical lens 15 is irradiated on the disc 10 through the half mirror 16, but the rectangular light beam from the cylindrical lens 15 will not reach the lens 17. In other words, only the light beam reflected from the signal recording surface 21 of the disc reaches the lens 17 through the half mirror 16.

For example, the image sensor 18 comprises a charge coupled device (CCD) line sensor having $n$ linearly arranged photoelectric converting elements, where $n$ is an integer. The light beam imaged on the CCD line sensor is subjected to a photoelectric conversion with a predetermined resolution. The CCD line sensor comprises capacitors provided with respect to each of the $n$ photoelectric converting elements. When the light beam from the lens 17 is projected on a photoelectric converting element for a predetermined time period, a voltage proportional to the intensity of light projected on this photoelectric converting element is charged in a capacitor which is provided with respect to this photoelectric converting element. The voltages charged in the capacitors are successively produced from the CCD line sensor responsive to a clock pulse.

The motor 11 for rotating the disc 10 may be a pulse motor which rotates the disc 10 in synchronism with the scanning operation of the image sensor 18 or a D.C. motor.

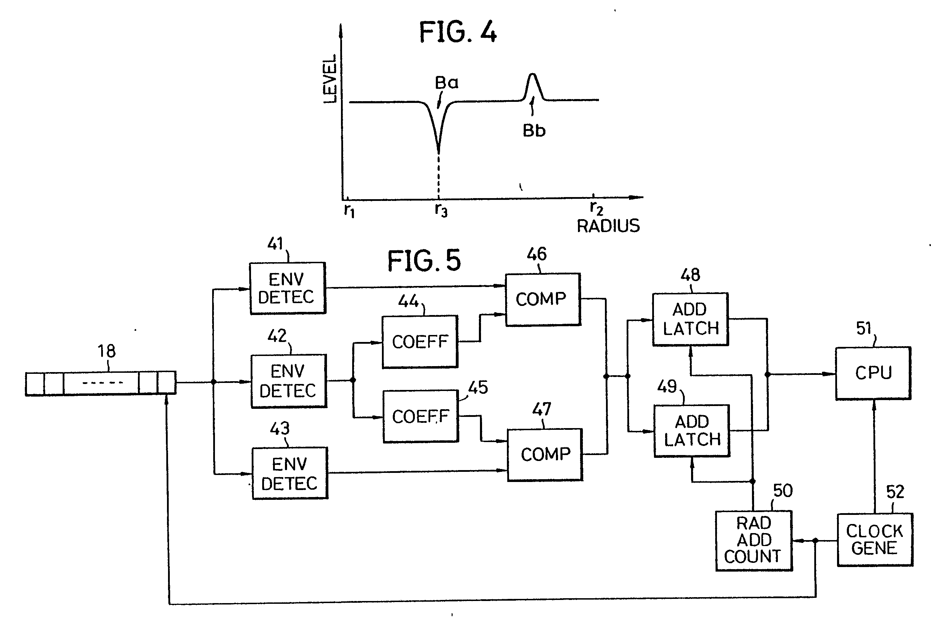

It will now be assumed that a defect 29 exists in the signal recording range 28 at a radius $r_3$ which is greater than the radius $r_1$ and is less than the radius $r_2$ as shown in Fig. 2. For example, the defect 29 is a discontinuity or chip 29a on the aluminium film which is deposited on the signal recording surface 21 by vapor deposition, or a foreign particle 29b within the plastic layer 20, as shown in Fig. 3. When the defect 29 exists in the signal recording range 28 of the disc 10, the output level of the image sensor 18 obtained as a result of the photoelectric conversion decreases abnormally as indicated by $B_a$ in Fig. 4 at a position of the radius $r_3$. According to the kind of the defect 29b, the output level of the image sensor 18 may increase abnormally as indicated by $B_b$ in Fig. 4. Thus, it is possible to detect the position of the defect existing in the signal recording range 28 of the disc 10 by detecting the output signal waveform of the image sensor 18. In addition, since the time period (width) over which the output level of the image sensor 18 decreases or increases abnormally is approximately proportional to the size of the defect, it is possible to detect the size of the defect by detecting the time period (width) over which the output level of the image sensor 18 decreases or increases abnormally.

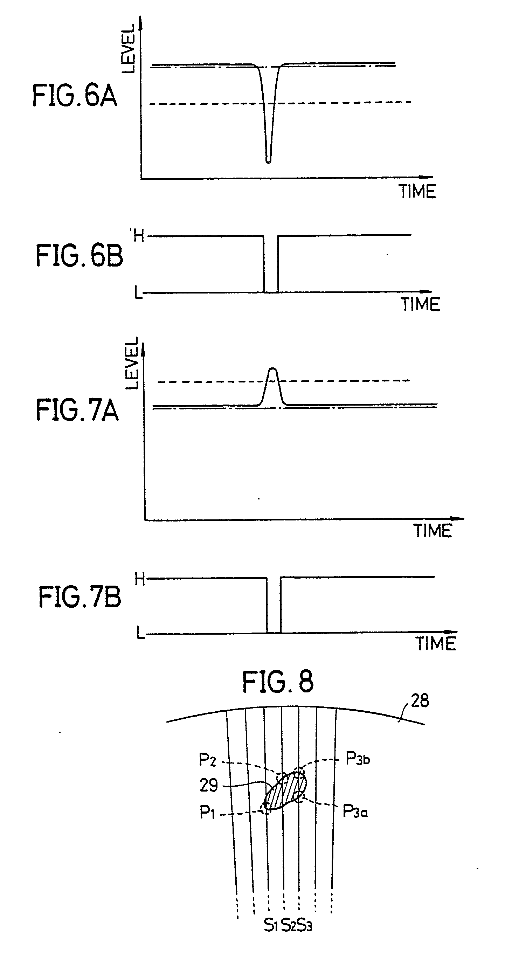

Next, a description will be given with respect to an embodiment of the defect inspecting apparatus according to the present invention by referring to the block system shown in Fig. 5. For example, the image sensor 18 shown in Fig. 5 is a CCD line sensor TCD101C manufactured by Tokyo Shibaura Electric Co., Ltd. of Japan having 1728 photoelectric converting elements. The voltages charged in the capacitors which are provided with respect to each of the photoelectric converting elements of the image sensor 18, are successively produced and supplied to envelope detectors 41 through 43 responsive to an output clock pulse of a clock pulse generator 52. The envelope detectors 41 through 43 each eliminate a clock pulse component included in the output of the image sensor 18 and detect the envelope of the output of the image sensor 18. When a defect exists in the signal recording range 28 of the disc 10, the output of the image sensor 18 includes an abnormally decreasing part as indicated by a solid line in Fig. 6A or an abnormally increasing part as indicated by a solid line in Fig. 7A. The envelope detectors 41 and 43 are constructed similarly, and are each a type of a filter for eliminating the clock pulse component included in the output of the image sensor 18 and for producing only the envelope of the output of the image sensor 18 indicated by the solid lines in Figs. 6A and 7A. Outputs of the envelope detectors 41 and 43 are supplied to respective comparators 46 and 47. On the other hand, the envelope detector 42 is a type of a filter for eliminating the clock pulse component included in the output of the image sensor 18 and for producing an approximately constant output indicated by a one-dot chain line in Fig. 6A or 7A even when the output of the image sensor 18 includes an abnormally decreasing part and/or an abnormally increasing part.

An output of the envelope detector 42 is supplied to a coefficient multiplier 44 which multiplies a coefficient $C_1$ which is less than one, and is also supplied to a coefficient multiplier 45 which multiplies a coefficient $C_2$ which is greater than one. Accordingly, in a case where the output of the image sensor 18 includes an abnormally decreasing part as indicated by the solid line in Fig. 6A, a signal having a level indicated by a phantom line in Fig. 6A is supplied to the comparator 46 from the coefficient multiplier 44. In this case, the comparator 46 compares the levels indicated by the solid line and the phantom line in Fig. 6A, and produces a signal shown in Fig. 6B. In Fig. 6B and Fig. 7B which will be described later, a high level of the signal is represented by "H" and a low level of the signal is represented by "L". Similarly, in a case where the output of the image sensor 18 includes an abnormally increasing part as indicated by the solid line in Fig. 7A, a signal having a level indicated by a phantom line in Fig. 7A is supplied to the comparator 47 from the coefficient multiplier 45. Hence, in this case, the comparator 47 compares the levels indicated by the solid line and the phantom line in Fig. 7A, and produces a signal shown in Fig. 7B.

A signal which is obtained by taking the logical sum (OR) of the output signals of the comparators 46 and 47, is supplied to address latch circuits 48 and 49 as a latch pulse. In other words, a signal which assumes a low level when a defect is detected in the signal recording range 28 of the disc 10, is supplied to the latch circuits 48 and 49. The latch circuit 48 is designed to latch an output signal of a radial address counter 50 responsive to a falling edge of the latch pulse. The address counter 50 obtains a radial address on the disc 10, that is, an address indicative of a radial position on the disc 10, by counting the output clock pulses of the clock pulse generator 52. On the other hand, the latch circuit 49 is designed to latch the output signal of the address counter 50 responsive to a rising edge of the latch pulse. Output signals of the latch circuits 48 and 49 are supplied to a central processing unit (CPU) 51. Accordingly, the CPU 51 is supplied with the radial addresses indicating a start and an end of each defect detected during one scan of the disc 10 in the radial direction thereof. The output clock pulse of the clock pulse generator 52 is also supplied to the CPU 51. The CPU 51 can thus discriminate the radial position and the radial length of the detected defect from the radial addresses supplied thereto. Moreover, the CPU 51 can discriminate the shape and size of the detected defect from the radial addresses supplied thereto during a plurality of scans of the disc 10 in the radial direction thereof.

Next, a description will be given with respect to the defect detecting operation of the CPU 51 by referring to Fig. 8 and figures which follow.

Fig. 8 shows a case where the defect 29 exists in the signal recording range 28 of the disc 10. In Fig. 8, first through third scanning loci formed during scans in the radial direction of the disc 10 are represented by $S_1$ through $S_3$. In this case, the defect inspecting apparatus detects the start of the defect 29 at a position $P_1$ indicated by a phantom line on the first scanning locus $S_1$, and the end of the defect 29 is detected at a position $P_{3b}$ indicated by a phantom line on the third scanning locus $S_3$. When the position of the defect 29 is described in terms of X—Y coordinates where the X-coordinate corresponds to the circumferential direction of the disc 10 and the Y-coordinate corresponds to the radial direction of the disc 10, the position $P_1$ can be described by an address $(x_1, y_1)$ and the position $P_{3b}$ can be described by an address $(x_3, y_{3'})$, for example. It will be assumed that a y-component without a "'(dash)" indicates the y-component of a position on the inner peripheral side of the disc 10, and that a y-component with the "'(dash)" indicates the y-component of a position on the outer peripheral side of the disc 10. For example, when a position $P_2$ on the second scanning locus $S_2$ is described by an address $(x_2, y_{2'})$ and another position $P_{3a}$ on the third scanning locus $S_3$ is

described by an address $(x_3, y_3)$, it is possible to discriminate whether the defect 29 is a single defect extending over the first through third scanning loci $S_1$ through $S_3$ by comparing the four addresses $(x_1, y_1)$, $(x_2, y_{2'})$, $(x_3, y_3)$, and $(x_3, y_{3'})$. Accordingly, it is possible to discriminate from the two addresses $(x_1, y_1)$ and $(x_3, y_{3'})$ the maximum area of the defect 29. Further, it is possible to discriminate from the four addresses $(x_1, y_1)$, $(x_2, y_{2'})$, $(x_3, y_3)$, and $(x_3, y_{3'})$ the shape of the defect 29.

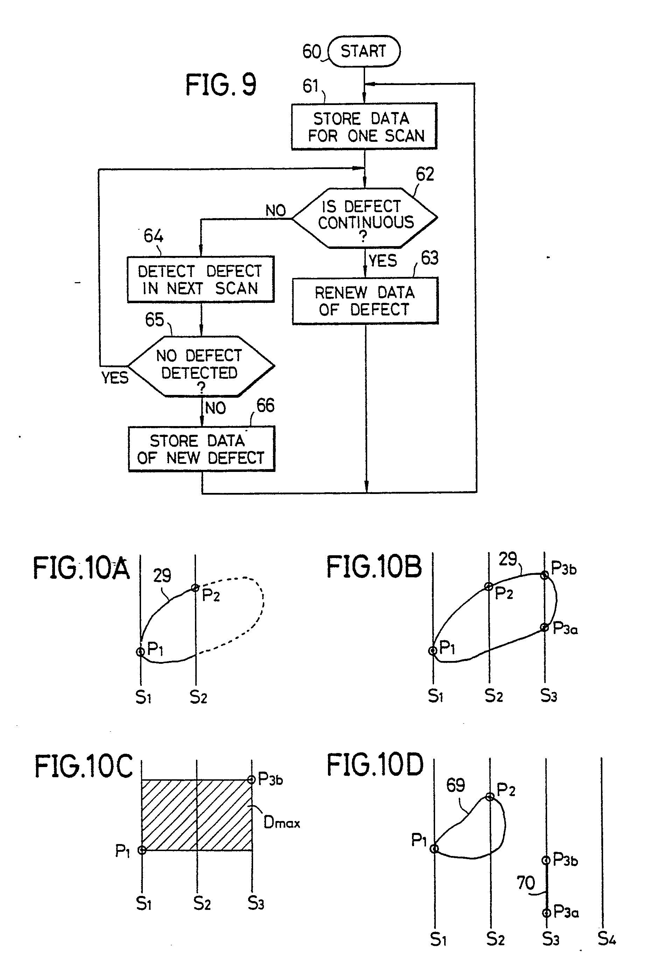

Fig. 9 is a flow chart showing a first routine for discriminating the size of the defect in the CPU 51 shown in Fig. 5. In Fig. 9, the first routine starts from a step 60, and the radial addresses describing the start and the end of the detected defect during one scan in the radial direction of the disc 10 are stored in a step 61. For convenience' sake, it will be assumed that the defect 29 extending over the first through third scanning loci $S_1$ through $S_3$ exists in the signal recording range 28 of the disc 10 as shown in Fig. 10B, and that the data related to the address $(x_1, y_1)$ where the defect 29 starts on the first scanning locus $S_1$ and the data related to the address $(x_2, y_{2'})$ where the defect 29 ends on the second scanning locus $S_2$ as shown in Fig. 10A are already stored in the CPU 51.

A step 62 discriminates whether the defect detected on the third scanning locus $S_3$ is continuous with the defect previously detected on the first and second scanning loci $S_1$ and $S_2$. In other words, the step 62 discriminates whether the defect detected on the third scanning locus $S_3$ is the continuation of the defect detected on the first and second scanning loci $S_1$ and $S_2$. When the addresses where the defect on the third scanning locus $S_3$ starts and ends are represented by $(x_3, y_3)$ and $(x_3, y_{3'})$, respectively, the step 62 discriminates whether the relations $y_1 \leqq y_{3'}$ and $y_{2'} \geqq y_3$ both stand.

When the discrimination result in the step 62 is YES, that is, when the defect 29 shown in Fig. 10B exists, a step 63 renews the address data related to the start and the end of the defect 29. In a case (a) where the relations $y_{2'} \leqq y_{3'}$ and $y_1 \leqq y_3$ both stand, the step 63 renews the address data to $(x_1, y_1)$ and $(x_3, y_{3'})$. In a case (b) where the relations $y_{2'} \geqq y_{3'}$ and $y_1 > y_3$ both stand, the step 63 renews the address data to $(x_1, y_3)$ and $(x_3, y_{2'})$. In a case (c) where the relations $y_{2'} > y_{3'}$ and $y_1 < y_3$ both stand the step 63 renews the address data to $(x_1, y_1)$ and $(x_3, y_{2'})$. Further, in a case (d) where the relations $y_{2'} < y_{3'}$ and $y_1 > y_3$ both stand, the step 63 renews the address data to $(x_1, y_3)$ and $(x_3, y_{3'})$. Hence, the defect 29 shown in Fig. 10B falls under the case (a) described above, and the step 63 renews the address data to $(x_1, y_1)$ and $(x_3, y_{3'})$. When the step 63 is completed, the operation of the CPU 51 is returned to the step 61, and operations similar to the above are performed with respect to the fourth and following scanning loci. Hence, when the defect 29 is observed strictly limiting to the first through third scanning loci $S_1$ through $S_3$, the address data related to the starting and ending positions $P_1$ and $P_{3b}$ of the defect 29 are stored, and it is possible to determine a maximum area $D_{max}$ of the defect 29 as shown in Fig. 10C, where $D_{max}$ is equal to

$$|(x_3 - x_1) \cdot (y_{3'} - y_1)|.$$

On the other hand, in a case where a defect 69 extends only over the first and second scanning loci $S_1$ and $S_2$ as shown in Fig. 10D, the discrimination result in the step 62 becomes NO. In this case, the operation of the CPU 51 advances to a step 64 which detects a defect on a fourth scanning line $S_4$. A step 65 discriminates whether no defect exists on the fourth scanning locus $S_4$, and the operation of the CPU 51 advances to a step 66 when a defect does not exist on the fourth scanning locus $S_4$ and the discrimination result in the step 65 is NO. The step 66 determines that a defect 70 detected on the third scanning locus $S_3$ is discontinuous with and independent from the defect 69, and stores the address data $(x_3, y_3)$ and $(x_3, y_{3'})$ related to the starting and ending positions $P_{3a}$ and $P_{3b}$ of the defect 70. Hence, the data required to determine the number of defects are also obtained in the step 66. When the step 66 is completed, the operation of the CPU 51 is returned to the step 61. On the other hand, when the discrimination result in the step 65 is YES, the operation of the CPU 51 is returned to the step 62 which then discriminates whether the defects on the third and fourth scanning loci $S_3$ and $S_4$ are parts of a single continuous defect which extends over the third and fourth scanning loci $S_3$ and $S_4$. Thereafter, the address data related to the defects are stored in a similar manner.

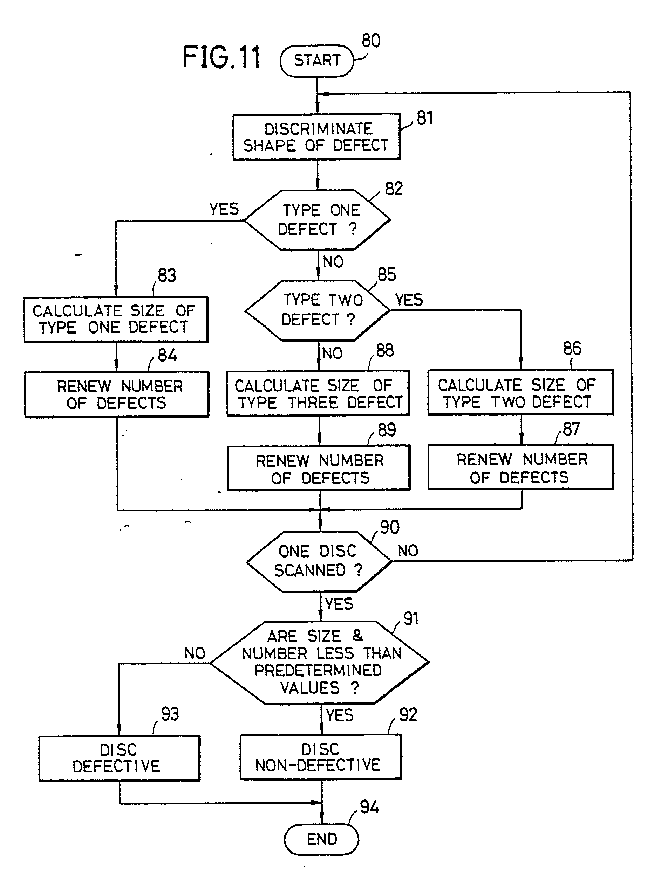

Next, a description will be given with respect to a second routine of the CPU 51 for discriminating a defective disc by use of the results obtained from the first routine described before. Fig. 11 is a flow chart showing the second routine. In Fig. 11, the second routine starts from a step 80, and a step 81 detects the shape of the defect by use of the results obtained from the first routine. A step 82 discriminates from the shape of the defect detected in the step 81 whether the defect is a type one defect. It will be assumed that the type one defect refers to a defect in the form of a line such as a scratch formed on the surface 23 of the plastic layer 20 or on the signal recording surface 21 of the disc 10. When the discrimination result in the step 82 is YES, a step 83 calculates the size of the first type defect, and a step 84 renews the number of detected defects.

On the other hand, when the discrimination result in the step 82 is NO, a step 85 discriminates from the shape of the defect detected in the step 81 whether the defect is a two two defect. It will be assumed that the type two defect refers to dirt or the like existing on the surface 23 of the plastic layer 20 of the disc 10. When the discrimination result in the step 85 is YES, a step 86 calculates the size of the type two defect, and a step 87 renews the number of detected defects. When the discrimination result in the step 85 is NO, it is discriminated that the defect is a type three defect. It will be assumed that the type three defect refers to a foreign particle or the like mixed into the plastic layer 20 or lying on the signal recording surface 21 of the disc 10. Accordingly, when the discimination result in the step 85 is NO, a step 88 calculates the size of the type three defect, and a step 89 renews the number of detected defects.

When the number of detected defects is renewed in the step 84, 87, or 89, a step 90 discriminates whether the scanning of the entire signal recording range 28 of the disc 10 is completed. The operation of the CPU 51 is returned to the step 81 when the discrimination result in the step 90 is NO. On the other hand, when the discrimination result in the step 90 is YES, a step 91 discriminates whether the side and number of the detected defects are less than respective predetermined values. A step 92 determines that the disc 10 is non-defective when the discrimination result in the step 91 is YES, and the second routine is ended in a step 94. A step 93 determines that the disc 10 is defective when the discrimination result in the step 91 is NO, and the second routine is ended in the step 94.

Next, a description will be given with respect to the resolution of the defect inspecting apparatus in the radial and circumferential directions of the disc.

It will be assumed that the image sensor 18 shown in Fig. 5 has $n$ photoelectric converting elements, the clock pulse supplied to the image sensor 18 from the clock pulse generator 52 has a period $T_c$, and it takes $T$ (μsec) for the disc 10 to undergo one revolution. In this case, when the light beam irradiated on the signal recording range 28 of the disc 10 is projected onto the $n$ photoelectric converting elements when the photoelectric conversion takes place, it takes $n \times T_c$ (μsec) to make one scan over the disc 10. In addition, a number of scans $N$ made during one revolution of the disc is equal to $T/(n \times T_c)$. In the case of the disc 10 shown in Fig. 2 having the signal recording range 28 which has the radial width $(r_2-r_1)$ (mm), a resolution $R_r$ in the radial direction of the disc 10 is equal to $(r_2-r_1)/n$ (mm). A resolution $R_c$ in the circumferential direction of the disc 10 is equal to $R_{co}=2\pi r_2/N$ (mm) at the outer peripheral part of the signal recording range 28, and is equal to $R_{ci}=2\pi r_1/N$ (mm) at the inner peripheral part of the signal recording range 28.

Accordingly, in a case where $r_1=22.5$ (mm), $r_2=59$ (mm), and $n=1728$, the resolution $R_r$ in the radial direction is

$$(59-22.5) \ (mm)/1728 \fallingdotseq 2.1 \times 10^{-2} \ (mm)$$
$$= 21 \ (\mu m).$$

In addition, when the period $T_c$ of the clock pulse is equal to 0.5 (μsec) in this case where the resolution of the photoelectric conversion in the radial direction is approximately equal to 21 (μm), it takes

$$0.5 \ (\mu sec) \times 1728 \fallingdotseq 860 \ (\mu sec) = 0.86 \ (msec)$$

to make one scan over the disc 10.

Because the resolution $R_r$ is set approximately equal to 21 (μm) in the numerical example given above, it is desirable to set the resolution in the circumferential direction also approximately equal to 21 (μm). During one scan in the radial direction of the disc 10 from the inner peripheral part to the outer peripheral part of the disc 10, the scan is fine at the inner peripheral part of the disc but is coarse at the outer peripheral part of the disc. For this reason, it is desirable to set the resolution $R_{co}$ in the circumferential direction at the outer peripheral part of the disc approximately equal to 21 (μm). Since $R_{co}=2\pi r_2/N$ (mm) and $N=T/(n \times T_c)$ as described before, the following equations can be derived.

$$R_{co}=2\pi r_2(n \times T_c)/T \ (mm)$$
$$T=2\pi r_2(n \times T_c)/R_{co} \ (\mu sec)$$

When the numerical values used before are substituted into the above equation for $T$, the following is obtained.

$$T=2\pi(59) \ (1728 \times 0.5)/(2.1 \times 10^{-2})$$
$$\fallingdotseq 1.5 \times 10^7 \ (\mu sec)$$
$$= 15 \ (sec)$$

Hence, according to this numerical example, the disc 10 can be scanned in its entirety for possible defects in approximately 15 (sec).

In the embodiment described before, the image sensor 18 is described as being a one-dimensional line sensor. However, it is obvious for those skilled in the art to employ a two-dimensional line sensor for the image sensor 18. In addition, it is possible to provide a pair of image sensors symmetrically about the center of the disc. In this case, the disc can be scanned in its entirety for possible defects within approximately half the time compared to the case where only one image sensor is employed.

Further, the present invention is not limited to these embodiments, but various variations and modifications may be made without departing from the scope of the invention as claimed.

**Claims**

1. A defect inspecting apparatus for inspecting defects in an optical type disc, said defect inspecting apparatus comprising a motor (11) for rotating an optical type disc (10) which is to be inspected, light beam generating means (13) for generating a light beam, a lens system (14, 15) for irradiating the light beam generated from said light beam generating means on a signal recording range (28) of said disc over a predetermined range, image sensor means (18) for subjecting a light beam reflected from a signal recording surface (21) of said disc to a photoelectric conversion, and detecting means (41—47) for detecting a change in an output signal level of said image sensor means so as to detect the existence of defects in said disc, characterized in that said lens system (14, 15) converts the light beam generated from said light beam generating means (13) into a light beam having a cross section of a predetermined shape so that an irradiated part (30) on said disc (10) extends in a radial direction of said disc, the length of said irradiated part in the radial direction of said disc being at least slightly greater than the width of said signal recording range (28) in the radial direction of said disc and said image sensor means (18) being arranged to receive an image of said signal recording range (28) with said irradiated part (30).

2. A defect inspecting apparatus as claimed in claim 1, characterized in that said lens system (14, 15) converts the light beam generated from said light beam generating means (13) into a light beam having an approximately rectangular cross section so that said irradiated part (30) on said disc (10) has an approximately rectangular shape having a longer side extending in the radial direction of said disc, said longer side being at least slightly greater than the width of said signal recording range (28) in the radial direction of said disc.

3. A defect inspecting apparatus as claimed in claim 2, characterized in that said lens system (14, 15) comprises a collimator lens (14) for converting the light beams generated from said light beam generating means (13) into a cylindrical light beam, and a cylindrical lens (15) for converting the cylindrical light beam from said collimator lens into said light beam having the approximately rectangular cross section.

4. A defect inspecting apparatus as claimed in claim 1, characterized in that said image sensor means (18) comprises a line sensor having a plurality of linearly arranged photoelectric converting elements.

5. A defect inspecting apparatus as claimed in claim 1, characterized in that said detecting means (41—47) produces a signal which assumes a low level in correspondence with a level changing part of the output of said image sensor means (18), and said defect inspecting apparatus further comprises a clock pulse generator (52) for generating clock pulses, a radial address counter (50) for counting the output clock pulses of said clock pulse generator, first and second latch circuits (48, 49) for latching an output counted value of said address counter responsive to the output signal of said detecting means, said first latch circuit latching the output counted value of said address counter responsive to a falling edge of the output signal of said detecting means so as to produce a radial address representing a position where a detected defect starts, said second latch circuit latching the output counted value of said address counter responsive to a rising edge of the output signal of said detecting means so as to produce a radial address representing a position where the detected defect ends.

6. A defect inspecting apparatus as claimed in claim 5, characterized in that said image sensor means (18) comprises a line sensor having a plurality of linearly arranged photoelectric converting elements, and said output clock pulses of said clock pulse generator (52) are supplied to said image sensor means so that said image sensor means successively produces outputs of each of said photoelectric sensor elements responsive to said clock pulses.

7. A defect inspecting apparatus as claimed in claim 5, characterized in that said defect inspecting apparatus further comprises a discriminating circuit (51) supplied with the output radial addresses of said first and second latch circuits (48, 49) for discriminating from the radial addresses supplied thereto the length of the detected defect in the radial direction of said disc.

8. A defect inspecting apparatus as claimed in claim 7, characterized in that said discriminating circuit (51) discriminates the length of the detected defect in a circumferential direction of said disc from a plurality of radial addresses produced from said first and second latch circuits (48, 49) during a plurality of scans in the radial direction of said disc.

9. A defect inspecting apparatus as claimed in claim 5, characterized in that said discriminating circuit (51) discriminates the shape, size, and number of detected defects from a plurality of radial addresses produced from said first and second latch circuits (48, 49) during a plurality of scans in the radial direction of said disc.

**Patentansprüche**

1. Defektprüfvorrichtung zur Untersuchung von Defekten an einer optischen Platte, enthaltend einen Motor (11) zum Drehantrieb einer zu untersuchenden optischen Platte (10), eine Lichtstrahlerzeugungsvorrichtung (13) zur Erzeugung eines Lichtstrahls, eine Linsenanordnung (14, 15), die den von der Lichtstrahlerzeugungsvorrichtung erzeugten Lichtstrahl auf einen Signalaufzeichnungsbereich (28) der Platte über einen vorbestimmten Bereich strahlt, eine Bildmeßfühlvorrichtung (18), die einen von einer Signalaufzeichnungsoberfläche (21) der Platte reflektierten Lichtstrahl einer fotoelektrischen Umwandlung unterwirft, und eine Erfassungsvorrichtung (41—47), die eine Änderung im Ausgangssignalpegel der Bildmeßfühlvorrichtung zur Erfassung des Vorhandenseins von Defekten an der Platte festellt, dadurch gekennzeichnet, daß die Linsenanordnung (14, 15) den von der Lichtstrahlerzeugungsvorrichtung (13) erzeugten Lichtstrahl in einen Lichtstrahl mit einem Querschnitt einer vorbestimmten Form umsetzt, so daß ein bestrahlter Bereich (30) auf der Platte (10) sich in einer radialen Richtung der Platte erstreckt, wobei die Länge des bestrahlten Bereichs in der radialen Richtung der Platte zumindest geringfügig größer als die Breite des Signalaufzeichnungsbereichs (28) in der radialen Richtung der Platte ist, und daß die Bildmeßfühlvorrichtung (18) so angeordnet ist, daß sie ein Bild des Signalaufzeich-

7

nungsbereichs (28) mit dem bestrahlten Bereich (30) empfängt.

2. Defektprüfvorrichtung nach Anspruch 1, dadurch gekennzeichnet, daß die Linsenanordnung (14, 15) den von der Lichstrahlerzeugungsvorrichtung (13) erzeugten Lichtstrahl in einen Lichtstrahl mit einem angenähert rechtwinkligen Querschnitt umwandelt, so daß der bestrahlte Bereich (30) auf der Platte (10) eine angenähert rechtwinklige Form mit einer längeren Seite aufweist, die sich in die radiale Richtung der Platte erstreckt, wobei diese längere Seite zumindest geringfügig größer als die Breite des Signalaufzeichnungsbereichs (28) in der radialen Richtung der Platte ist.

3. Defektprüfvorrichtung nach Anspruch 2, dadurch gekennzeichnet, daß die Linsenanordnung (14, 15) eine Kollimatorlinse (14) aufweist, die den von der Lichtstrahlerzeugungsvorrichtung (13) erzeugten Lichtstrahl in einen zylindrischen Lichtstrahl umformt, und eine zylindrische Linse (15), die den zylindrischen Lichtstrahl von der Kollimatorlinse in den Lichtstrahl umformt, der den angenähert rechtwinkligen Querschnitt aufweist.

4. Defektprüfvorrichtung nach Anspruch 1, dadurch gekennzeichnet, daß die Bildmeßfühlvorrichtung (18) einen Linienmeßfühler aufweist, der mehrere linear angeordnete fotoelektrische Umwandlungselemente aufweist.

5. Defektprüfvorrichtung nach Anspruch 1, dadurch gekennzeichnet, daß die Erfassungsvorrichtung (41—47) ein Signal erzeugt, das einen niedrigen Pegel in bezug auf einen Pegeländerungsbereich des Ausgangssignals der Bildmeßfühlvorrichtung (18) aufweist, und daß die Defektprüfvorrichtung ferner einen Taktimpulsgenerator (52) zur Erzeugung von Taktimpulsen aufweist, einen radialen Adressenzäher (50), der die Ausgangstaktimpulse des Taktimpulsgenerators zählt, erste und zweite Verriegelungsschaltungen (48, 49), die einen gezählten Ausgangswert von dem Adressenzähler in Abhängigkeit von dem Ausgangssignal der Erfassungsvorrichtung verriegeln, wobei die erste Verriegelungsschaltung den gezählten Wert vom Ausgang des Adressenzählers ansprechend auf eine abfallende Flanke des Ausgangssignals der Erfassungsvorrichtung verriegelt, um so eine radiale Adresse zu erzeugen, die eine Position wiedergibt, an der ein erfaßter Defekt beginnt, wobei die zweite Verriegelungsschaltung den gezählten Wert vom Ausgang des Adressenzählers ansprechend auf eine ansteigende Flanke des Ausgangssignals der Erfassungsvorrichtung verriegelt, um eine radiale Adresse zu erzeugen, die eine Position wiedergibt, an der der erfaßte Defekt endet.

6. Defektprüfvorrichtung nach Anspruch 5, dadurch gekennzeichnet, daß die Bildmeßfühlvorrichtung (18) einen Linienmeßfühler aufweist, der mehrere linear angeordnete fotoelektrische Umwandlungselemente aufweist, und daß die Taktimpulse vom Ausgang des Taktimpulsgenerators (52) der Bildmeßfühlvorrichtung zugeführt werden, so daß die Bildmeßfühlvorrichtung aufeinanderfolgend Ausgangssignale von jedem der fotoelektrischen Meßfühlelemente ansprechend auf die Taktimpulse erzeugt.

7. Defektprüfvorrichtung nach Anspruch 5, dadurch gekennzeichnet, daß das Fehlerprüfgerät ferner eine Diskriminatorschaltung (51) aufweist, der die radialen Ausgangsadressen der ersten und zweiten Verriegelungsschaltungen (48, 49) zugeführt werden und die aus den ihr zugeführten radialen Adressen die Länge des erfaßten Defekts in der radialen Richtung der Platte bestimmt.

8. Defektprüfvorrichtung nach Anspruch 7, dadurch gekennzeichnet, daß die Diskriminatorschaltung (51) die Länge des erfaßten Defekts in einer am Umfang der Platte verlaufenden Richtung aus mehreren radialen, von der ersten und zweiten Verriegelungsschaltung (48, 49) erzeugten Adressen während mehrerer Abtastungen in der radialen Richtung der Platte bestimmt.

9. Defektprüfvorrichtung nach Anspruch 5, dadurch gekennzeichnet, daß die Diskriminatorschaltung (51) die Form, Größe und Anzahl von festgestellten Defekten aus mehreren radialen Adressen bestimmt, die von der ersten und zweiten Verriegelungsschaltung (48, 49) während mehrerer Abtastungen in der radialen Richtung der Platte erzeugt werden.

**Revendications**

1. Dispositif d'examen de défauts présents dans des disques de type optiques, ledit dispositif d'examen de défauts comprenant un moteur (11) pour entraîner en rotation un disque de type optique (10) qui doit être examiné, au moyen de génération d'un faisceau lumineux (13) pour générer un faisceau lumineux, un ensemble à lentilles (14, 15) pour envoyer le faisceau lumineux généré à partir du moyen de génération de faisceau lumineux sur une zone (28) d'enregistrement de signal dudit disque sur l'ensemble d'un domaine prédéterminé, un moyen détecteur d'image (18) pour soumettre un faisceau lumineux réfléchi de la surface d'enregistrement de signal (21) dudit disque a une conversion photoélectrique, et un moyen de détection (41, 47) pour détecter un changement de niveau de signal de portée dudit moyen détecteur d'image de porte à détecter l'existence de défauts dans ledit disque, caractérisé en ce que ledit ensemble de lentilles (14, 15) convertit le faisceau lumineux généré par ledit moyen de génération de faisceau lumineux (13), en un faisceau lumineux ayant une section transversale de forme prédéterminée, de sorte qu'une partie irradiée (30) sur ledit disque (10) s'étend dans une direction radiale dudit disque, la longueur de ladite partie irradiée dans la direction radiale dudit disque étant légèrement plus grande que la largeur de ladite zone d'enregistrement de signal (28) dans la direction radiale dudit disque, et ledit moyen détecteur d'image (18) étant disposé pour recevoir une image de ladite zone d'enregistrement du signal (28) avec ladite partie irradiée (30).

2. Dispositif d'examen de défauts selon la revendication 1, caractérisé en ce que l'ensemble à lentilles (14, 15) convertit le faisceau lumineux généré à partir du moyen de génération de faisceau lumineux (13), en un faisceau lumineux ayant une section transversale approximativement rectangulaire de sorte que la partie irradiée (30) sur ledit disque (10) a une forme approximativement rectangulaire ayant un grand côté s'étendant dans la direction radiale dudit disque, ledit grand côté étant légèrement plus grand que la largeur de ladite zone (28) d'enregistrement du signal dans la direction radiale dudit disque.

3. Dispositif d'examen de défauts selon la revendication 2, caractérisé en ce que ledit ensemble à lentilles (14, 15) comprend une lentille collimateur (14) pour convertir les faisceaux lumineux générés par ledit moyen de génération de faisceau lumineux (13), en un faisceau lumineux cylindrique, et une lentille cylindrique (15) pour convertir le faisceau lumineux provenant de ladite lentille collimateur, en undit faisceau lumineux ayant une section transversale approximativement rectangulaire.

4. Dispositif d'examen de défauts selon la revendication 1, caractérisé en ce que ledit moyen détecteur d'image (18) comprend un détecteur de lignes possédant une pluralité d'éléments convertisseurs photoélectriques disposés linéairement.

5. Dispositif d'examen de défauts selon la revendication 1, caractérisé en ce que ledit moyen de détection (41, 47) produit un signal qui prend un niveau bas correspondant avec une partie variable au niveau de la sortie dudit moyen détecteur d'image (18), et ledit dispositif d'examen de défauts comprend en outre un générateur d'impulsion d'horloge (52) pour générer des impulsions d'horloge, un compteur d'adresse radiale (50) pour compter les impulsions d'horloge en sortie dudit générateur d'impulsion d'horloge, un premier et un second circuit tampon (48, 49) pour stocker une valeur comptée en sortie dudit compteur d'adresse sensible au signal de sortie dudit moyen de détection, ledit premier circuit tampon stockant la valeur comptée en sortie dudit compteur d'adresse sensible à un front descendant du signal de sortie dudit moyen de détection de sorte à produire une adresse radiale représentant une position où un défaut détecté commence, ledit second circuit tampon stockant la valeur comptée en sortie dudit compteur d'adresse sensible à un front montant du signal de sortie dudit moyen de détection de sorte à produire une adresse radiale représentant une position où le défaut détecté se termine.

6. Dispositif d'examen de défauts selon la revendication 5, caractérisé en ce que ledit moyen détecteur d'image (18) comprend un détecteur à lignes possédant une pluralité d'éléments convertisseurs photoélectriques disposés linéairement, et les impulsions d'horloge en sortie dudit générateur d'impulsion d'horloge (52) sont fournies audit moyen détecteur d'image de sorte que ledit moyen détecteur d'image produise successivement des sorties de chacun desdits éléments convertisseurs photoélectriques sensibles auxdites impulsions d'horloge.

7. Dispositif d'examen de défauts selon la revendication 5, caractérisé en ce que ledit dispositif d'examen de défauts comprend en outre un circuit sélectif (51) alimenté par les addresses radiales en sortie desdits premier et second circuits tampon (48, 49) pour sélectionner à partir des adresses radiales fournies à ces circuits la longueur du défaut détecté dans la direction radiale dudit disque.

8. Dispositif d'examen de défauts selon la revendication 7, caractérisé en ce que ledit circuit sélectif (51) sélectionne la longueur du défaut détecté dans une direction circonférentielle dudit disque à partir d'une pluralité d'adresses radiales produites à partir des premier et second circuits tampon (48, 49) pendant une pluralité de balayages dans la direction radiale dudit disque.

9. Dispositif d'examen de défauts selon la revendication 5, caractérisé en ce que ledit circuit sélectif (51) sélectionne la forme, la taille et le nombre de défauts détectés à partir d'une pluralité d'adresses radiales produites à partir des premier et second circuits tampon (48, 49) pendant une pluralité de balayages dans la direction radiale dudit disque.

FIG.1A

FIG.1B

FIG. 2

FIG. 3

1

## FIG. 4

## FIG. 5

EP 0 152 165 B1

FIG.6A

FIG.6B

FIG.7A

FIG.7B

FIG. 8

FIG. 9

60 ( START )

61 — STORE DATA
FOR ONE SCAN

62 — IS DEFECT
CONTINUOUS
?

NO

64 — DETECT DEFECT
IN NEXT SCAN

YES — 63 — RENEW DATA
OF DEFECT

65 — NO DEFECT
DETECTED
?

YES

NO

66 — STORE DATA
OF NEW DEFECT

FIG.10A
29
P₂
P₁
S₁  S₂

FIG.10B
29
P₃ᵦ
P₂
P₁
P₃ₐ
S₁  S₂  S₃

FIG.10C
P₃ᵦ
Dmax
P₁
S₁  S₂  S₃

FIG.10D
69
P₂
P₁
P₃ᵦ
70
P₃ₐ
S₁  S₂  S₃  S₄

FIG.11 ( START ) 80

DISCRIMINATE
SHAPE OF DEFECT 81

TYPE ONE
DEFECT ? 82

YES

NO

TYPE TWO
DEFECT ? 85

YES

NO

CALCULATE SIZE OF
TYPE ONE DEFECT 83

CALCULATE SIZE OF
TYPE THREE DEFECT 88

CALCULATE SIZE OF
TYPE TWO DEFECT 86

RENEW NUMBER
OF DEFECTS 84

RENEW NUMBER
OF DEFECTS 89

RENEW NUMBER
OF DEFECTS 87

ONE DISC
SCANNED ? 90

NO

YES

ARE SIZE &
NUMBER LESS THAN
PREDETERMINED
VALUES ? 91

NO

YES

DISC
DEFECTIVE 93

DISC
NON-DEFECTIVE 92

( END ) 94

5